# EUROPÄISCHE PATENTSCHRIFT

(11) **EP 2 527 874 B1**
(45) Veröffentlichungstag und Bekanntmachung des Hinweises auf die Patenterteilung: **11.10.2017**
(21) Anmeldenummer: 11004354.4
(22) Anmeldetag: 26.05.2011
(51) Int. Cl.: G01T 1/29

(54) **System, Vorrichtung und Verfahren zum Auslesen von in einer Speicherleuchtstoffplatte gespeicherten Röntgeninformationen**
System, device and method for reading x-ray information stored in a luminescent material layer
Système, dispositif et procédé destinés à l'extraction d'informations radiographiques stockées sur un disque fluorescent de mémoire

(43) Veröffentlichungstag der Anmeldung: 28.11.2012
(73) Patentinhaber: Agfa HealthCare, 2640 Mortsel (BE)
(72) Erfinder: Mair, Stephan, 86157 Augsburg (DE)
(74) Vertreter: Linsmeier, Josef

(56) Entgegenhaltungen:
- DE-A1- 19 719 954
- JP-A- 58 072 040
- JP-A- 58 072 041
- US-A- 4 320 296
- US-A- 5 596 202
- US-B1- 6 313 477

## Beschreibung

Die vorliegende Erfindung betrifft ein System, eine entsprechende Speicherleuchtstoffplatte sowie ein entsprechendes Verfahren zum Auslesen von in einer Speicherleuchtstoffplatte gespeicherten Röntgeninformationen gemäß dem Oberbegriff der unabhängigen Ansprüche.

Eine Möglichkeit zur Aufzeichnung von Röntgenbildern besteht darin, die durch ein Objekt, beispielsweise einen Patienten, hindurch tretende Röntgenstrahlung als latentes Bild in einer sogenannten Speicherleuchtstoffschicht zu speichern. Zum Auslesen des latenten Bildes wird die Speicherleuchtstoffschicht mit Stimulationslicht bestrahlt und dabei zur Aussendung von Emissionslicht angeregt. Das Emissionslicht, dessen Intensität dem in der Speicherleuchtstoffschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden. Aus US 5 596 202 ist ein System gemäß der Präambel der unabhängigen Ansprüche bekannt. Bei Systemen, Vorrichtungen und Verfahren nach dem Stand der Technik kann nicht in allen Anwendungsfällen ein zuverlässiges Auslesen der gespeicherten Röntgeninformationen bei gleichzeitig einfachem Aufbau gewährleistet werden.

Es ist Aufgabe der vorliegenden Erfindung, ein System, eine entsprechende Speicherleuchtstoffplatte sowie ein entsprechendes Verfahren anzugeben, durch welches bzw. welche bei vereinfachtem Aufbau ein möglichst zuverlässiges Auslesen der gespeicherten Röntgeninformationen ermöglicht wird.

Die Aufgabe wird durch das System, die Speicherleuchtstoffplatte bzw. das Verfahren gemäß den unabhängigen Ansprüchen gelöst.

Das erfindungsgemäße System umfasst eine Speicherleuchtstoffplatte, in welcher Röntgeninformationen gespeichert werden können, und eine Vorrichtung zum Auslesen von in der Speicherleuchtstoffplatte gespeicherten Röntgeninformationen mit einer Lichtquelle zur Erzeugung von Stimulationslicht, welches die Speicherleuchtstoffplatte zur Aussendung von erstem Emissionslicht anregen kann, und einem Detektor zum Erfassen des von der Speicherleuchtstoffplatte ausgesandten ersten Emissionslichts und ist gekennzeichnet durch mindestens eine Markierung, welche derart angeordnet und ausgebildet ist, dass Stimulationslicht auf die Markierung auftreffen und von der Markierung zumindest teilweise reflektiert werden und/oder die Markierung zur Abgabe von zweitem Emissionslicht, insbesondere Lumineszenzlicht, anregen kann, wobei das reflektierte Stimulationslicht bzw. das abgegebene zweite Emissionslicht vom Detektor erfasst und daraus eine Markierungsinformation abgeleitet werden kann. Das System ist ferner gekennzeichnet durch eine Steuerungseinrichtung, die dazu eingerichtet ist, das Auslesen der Speicherleuchtstoffplatte und/oder eine Verarbeitung der ausgelesenen Röntgeninformationen in Abhängigkeit von der Markierungsinformation zu steuern.

Das erfindungsgemäße Verfahren, bei welchem eine Speicherleuchtstoffplatte mit dem von einer Lichtquelle erzeugten Stimulationslicht zur Aussendung von erstem Emissionslicht angeregt wird, welches von einem Detektor erfasst wird, ist dadurch gekennzeichnet, dass das von der Lichtquelle erzeugte Stimulationslicht auf mindestens eine an der Speicherleuchtstoffplatte und/oder in der Vorrichtung vorgesehene Markierung trifft und dabei von der Markierung zumindest teilweise reflektiert wird und/oder die Markierung zur Abgabe von zweitem Emissionslicht, insbesondere Lumineszenzlicht, anregt, wobei das reflektierte Stimulationslicht bzw. abgegebene zweite Emissionslicht vom Detektor erfasst und daraus eine Markierungsinformation abgeleitet wird, anhand welcher das Auslesen der Speicherleuchtstoffplatte und/oder eine Verarbeitung der ausgelesenen Röntgeninformationen gesteuert wird.

Die Erfindung basiert auf dem Gedanken, an der Speicherleuchtstoffplatte eine lichtreflektierende, lichtstreuende und/oder lumineszierende, d.h. fluoreszierende oder phosphoreszierende, Markierung vorzusehen und diese mit Hilfe der in der Vorrichtung für das Auslesen der Speicherleuchtstoffplatte vorgesehenen Komponenten, insbesondere der Lichtquelle zur Erzeugung des Stimulationslichts und dem Detektor zum Erfassen des durch das Stimulationslicht angeregten ersten Emissionslichts, zu lesen, indem das auf die Markierung treffende und teilweise reflektierte bzw. gestreute Stimulationslicht und/oder das in der Markierung durch das Stimulationslicht angeregte Lumineszenzlicht von dem Detektor erfasst und in entsprechende Markierungsinformationen umgewandelt wird. Anhand der hierbei erhaltenen Markierungsinformationen, die Eigenschaften der Speicherplatte betreffen, wird der Auslesevorgang selbst und/oder die Verarbeitung der beim Auslesevorgang der Speicherleuchtstoffplatte erhaltenen Röntgeninformationen gesteuert.

Durch das Erfassen der Markierung mittels der in der Vorrichtung ohnehin zum Zwecke des Auslesens der Speicherleuchtstoffplatte vorhandenen Komponenten kann auf die üblicherweise erforderlichen zusätzlichen Komponenten - beispielsweise Sensoren zum Erfassen von Barcodes auf der Speicherleuchtstoffplatte oder von bestimmten Positionen des Stimulationslichtstrahls - verzichtet werden. Der Aufbau der erfindungsgemäßen Systeme wird dadurch deutlich einfacher, wobei gleichzeitig aufgrund der anhand der abgeleiteten Markierungsinformationen erfolgten Steuerung des Auslesens des Speicherleuchtstoffplatte bzw. des Verarbeitens der erhaltenen Röntgeninformationen eine hohe Bildqualität gewährleistet wird. Erfindungsgemäss enthält die Markierungsinformation eine die Speicherleuchtstoffplatte betreffende erste Information, die mindestens eine der folgenden Informationen enthält: Größe der Speicherleuchtstoffplatte, Herstellung- und/oder Verfallsdatum der Speicherleuchtstoffplatte, Beginn der auszulesenden Speicherleuchtstoffplatte (BOIP), Beginn eines auszulesenden Bereichs der Speicherleuchtstoffplatte (BOS) sowie Beginn einer auszulesenden Zeile (BOL) auf der Speicherleuchtstoffplatte.

Die insbesondere für die Steuerung des Auslesens der Speicherleuchtstoffplatte und/oder die Verarbeitung der ausgelesenen Röntgeninformationen erforderlichen plattenspezifischen Informationen werden hierdurch auf einfache Weise bereitgestellt und können in erfindungsgemäßer Weise bei einfacher Gestaltung des Systems erfasst werden.

Beispielsweise kann durch die Steuerungseinrichtung anhand eines aus der Markierung ermittelten Parameters zur Charakterisierung der Empfindlichkeit der Speicherleuchtstoffplatte für Röntgenstrahlung die Vorrichtung in der Weise gesteuert werden, dass im Falle einer hohen Empfindlichkeit der Speicherleuchtstoffplatte eine niedrige Intensität des Stimulationslichts und/oder niedrige Empfindlichkeit des Detektors für Emissionslicht eingestellt und im Falle einer niedrigen Empfindlichkeit eine hohe Intensität des Stimulationslichts und/oder hohe Empfindlichkeit des Detektors für Emissionslicht eingestellt wird. Entsprechendes gilt für die anhand der Markierung ermittelte Information zur Größe der Speicherleuchtstoffplatte.

Alternativ oder zusätzlich kann in der Steuerungseinrichtung anhand des erfassten Herstellungs- und/oder Verfallsdatums überprüft werden, ob die Speicherleuchtstoffplatte noch den für eine zuverlässige Röntgenaufnahme erforderlichen Zustand aufweist, indem das aktuelle Datum mit dem erfassten Verfallsdatum oder einem aus dem erfassten Herstellungsdatum errechneten Verfallsdatum verglichen wird und bei Überschreiten des jeweiligen Verfallsdatums z.B. der Ausleseprozess nicht gestartet wird und/oder eine entsprechende Information an die Bedienperson ausgegeben wird und/oder Vorrichtungsparameter angepasst werden. Bei den anzupassenden Vorrichtungsparametern handelt es sich beispielsweise um die Transportgeschwindigkeit der Speicherleuchtstoffplatte während und/oder nach dem Auslesevorgang. So kann insbesondere während des Löschens der Speicherleuchtstoffplatte in einer Löscheinheit, in welcher die Speicherleuchtstoffplatte mit Löschlicht bestrahlt wird, die Transportgeschwindigkeit reduziert werden.

Alternativ oder zusätzlich kann anhand einer auf der Speicherleuchtstoffplatte aufgebrachten Markierung in Form von in einem definierten Abstand voneinander beabstandeten Kennzeichnungen, wie z.B. Punkten, Strichen oder zweidimensionalen geometrischen Formen, eine absolute Abstandsinformation ermittelt werden, die beispielsweise im ausgelesenen Röntgenbild eingezeichnet wird und/oder zu einer Korrektur des ausgelesenen Röntgenbildes verwendet wird.

Alternativ oder zusätzlich wird anhand der erfassten Informationen bezüglich des Beginns der Speicherleuchtstoffplatte, des auszulesenden Bereichs bzw. der auszulesenden Zeile der Speicherleuchtstoffplatte der Auslesevorgang in der Weise gesteuert, dass die Erfassung der in der Speicherleuchtstoffplatte gespeicherten Röntgeninformationen erst dann gestartet wird, wenn die jeweilige Markierung erfasst wird oder eine bestimmte vorgegebene Zeitspanne seit der Erfassung der jeweiligen Markierung vergangen ist.

Bei einer weiteren bevorzugten Ausgestaltung enthält die Markierungsinformation eine das Auslesen der Speicherleuchtstoffplatte und/oder die Verarbeitung der ausgelesenen Röntgeninformationen betreffende zweite Information, die sich insbesondere auf mindestens eine der folgenden Informationen bezieht: Lage der auszulesenden Speicherleuchtstoffplatte in der Vorrichtung, zeitliches Verhalten eines entlang einer Zeile bewegten Stimulationslichtstrahls sowie zeitliche Veränderung der Empfindlichkeit der Vorrichtung beim Auslesen einer Zeile der Speicherleuchtstoffplatte. Die für die Steuerung des Auslesens der Speicherleuchtstoffplatte erforderlichen Informationen bzw. die anschließende Verarbeitung der Röntgeninformationen werden hierdurch auf einfache Weise bereitgestellt und können in erfindungsgemäßer Weise bei einfacher Gestaltung des Systems bzw. der Vorrichtung erfasst werden.

Beispielsweise kann anhand der erfassten Information bezüglich des zeitlichen Verhaltens des Stimulationslichtstrahls und/oder der zeitlichen Veränderung der Empfindlichkeit der Vorrichtung beim Auslesen einer Zeile der Speicherleuchtstoffplatte die Verarbeitung der erhaltenen Röntgeninformationen gesteuert werden. Insbesondere können hierbei Auswirkungen aufgrund von Geschwindigkeitsschwankungen des Stimulationslichtstrahls bzw. Empfindlichkeitsschwankungen der Vorrichtung, insbesondere der Lichtquelle für das Stimulationslicht und/oder des Detektors zur Erfassung des ersten Emissionslichts, auf das erhaltene Röntgenbild bei einer entsprechenden Verarbeitung der Röntgeninformationen kompensiert und dadurch eliminiert werden. Entsprechendes gilt für Abweichungen der Lage der Speicherleuchtstoffplatte beim Auslesen von einer vorgegebenen Soll-Lage, beispielsweise aufgrund einer leichten Verkippung oder Verdrehung der Platte bezüglich der Soll-Lage.

Es ist außerdem bevorzugt, dass die Speicherleuchtstoffplatte eine Trägerschicht und eine auf einer ersten Seite der Trägerschicht aufgebrachte Speicherleuchtstoffschicht aufweist und sich die Markierung auf der ersten Seite der Trägerschicht befindet. Durch die Anordnung der Markierung auf der Seite der Trägerschicht, auf der sich auch die Speicherleuchtstoffschicht befindet, brauchen für das Lesen der Markierung mittels der für das Auslesen der Speicherleuchtstoffschicht vorgesehenen Komponenten keine weiteren Maßnahmen, wie z.B. eine Umlenkung des Stimulationslichts und/oder des angeregten Emissionslichts, vorgenommen werden, so dass ein möglichst einfacher Aufbau erreicht wird.

Vorzugsweise befindet sich die Markierung in einem außerhalb der Speicherleuchtstoffschicht liegenden Bereich der Trägerschicht. Hierdurch wird gewährleistet, dass einerseits die für eine Röntgenaufnahme vorgesehene Fläche der Speicherleuchtstoffschicht durch die Markierung nicht vermindert wird und andererseits beim Lesen der Markierung nicht zusätzlich die Speicherleuchtstoffschicht zur Aussendung Emissionslicht angeregt wird, was eine Störung des Erfassens der Markierungsinformation zur Folge haben könnte.

Insbesondere kann die Markierung die Form eines Strichcodes aufweisen, in welchem Daten in Form von unterschiedlich breiten Strichen und Lücken kodiert sind. Hierdurch lassen sich insbesondere speicherplattenspezifische Daten auf besonders einfache Weise kodieren. Darüber hinaus können die Strichcodes auch mit den für das Auslesen der Speicherleuchtstoffplatte vorgesehenen Komponenten mit hoher Zuverlässigkeit gelesen werden, so dass Informationsverluste praktisch ausgeschlossen werden können.

Es ist außerdem bevorzugt, dass die Markierung mindestens eine Kennzeichnung, insbesondere in Form von Punkten, Linien oder zweidimensionalen Formen, umfasst, durch deren Form und/oder Lage auf der ersten Seite der Trägerschicht die Markierungsinformation bestimmt wird. Durch Erfassen einer solchen Kennzeichnung lassen sich insbesondere für den Auslesevorgang relevante Informationen auf einfache und zuverlässige Weise ableiten, beispielsweise zum Beginn der auszulesenden Speicherleuchtstoffplatte oder des auszulesenden Bereichs bzw. der jeweiligen Zeile auf der Speicherleuchtstoffplatte. Abhängig von den hierbei erhaltenen Markierungsinformationen wird der Auslesevorgang gesteuert.

Bei einer weiteren bevorzugten Ausführung ist die Markierung derart in der Vorrichtung angeordnet, dass ein von der Lichtquelle erzeugter Stimulationslichtstrahl auf die Markierung auftreffen kann, bevor und/oder nachdem der Stimulationslichtstrahl während des Auslesens auf die Speicherleuchtstoffplatte trifft. Hierbei können aus der erhaltenen Markierungsinformation für das Auslesen und/der die Verarbeitung der erhaltenen Röntgeninformation relevante Größen abgeleitet werden, beispielsweise zur Lage der auszulesenden Speicherleuchtstoffplatte relativ zur Vorrichtung und deren Komponenten sowie zum zeitlichen Verhalten des Stimulationslichtstrahls und/oder der Empfindlichkeit der Vorrichtung während des Auslesens einer Zeile der Speicherleuchtstoffplatte.

Es ist außerdem bevorzugt, dass die Markierung das Stimulationslicht, zumindest in Teilbereichen der Markierung, stärker reflektiert und/oder stärker streut als die Speicherleuchtstoffplatte. Dadurch wird erreicht, dass das von der Markierung reflektierte bzw. gestreute Stimulationslicht ausreichend stark ist, um auch dann vom Detektor hinreichend zuverlässig erfasst zu werden, wenn dieser - gegebenenfalls einschließlich eines vor dem Detektor befindlichen Filters - eine für das beim Auslesen der Speicherleuchtstoffplatte gestreute Stimulationslicht sehr geringe Empfindlichkeit aufweist.

Es ist darüber hinaus von Vorteil, dass die Empfindlichkeit des Detektors, gegebenenfalls einschließlich eines vor dem Detektor befindlichen Filters, für das von der Markierung abgegebene zweite Emissionslicht höher ist als für das Stimulationslicht. Insbesondere wird hierbei das von der Markierung abgegebene zweite Emissionslicht in einem Spektralbereich abgegeben, welcher gegenüber dem Spektralbereich des Stimulationslichts zu längeren oder kürzeren Wellenlängen hin verschoben ist. Hierdurch wird gewährleistet, dass im Falle lumineszierender Markierungen das von der jeweiligen Markierung abgegebene und vom Detektor erfasste Emissionslicht nicht durch Stimulationslichtanteile, die beispielsweise von Reflexionen oder Streuung des Stimulationslichts herrühren können, verfälscht wird.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: eine schematische Darstellung eines Beispiels eines Systems mit einer Vorrichtung zum Auslesen von Speicherleuchtstoffplatten;
- Fig. 2: ein erstes Beispiel von auf einer Speicherleuchtstoffplatte befindlichen Markierungen;
- Fig. 3: ein zweites Beispiel von auf einer Speicherleuchtstoffplatte befindlichen Markierungen;
- Fig. 4: ein drittes Beispiel von auf einer Speicherleuchtstoffplatte befindlichen Markierungen;
- Fig. 5: ein erstes Beispiel von in der Vorrichtung vorgesehenen Markierungen;
- Fig. 6: ein zweites Beispiel von in der Vorrichtung vorgesehenen Markierungen;
- Fig. 7: ein drittes Beispiel von in der Vorrichtung vorgesehenen Markierungen.

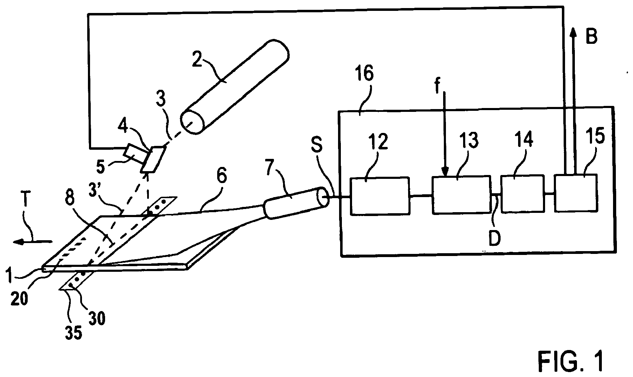

Figur 1 zeigt eine Vorrichtung zum Auslesen einer Speicherleuchtstoffplatte 1. Durch einen Laser 2 wird ein Stimulationslichtstrahl 3 erzeugt, welcher durch ein Ablenkelement 4 derart abgelenkt wird, dass sich dieser entlang einer Zeile 8 über die auszulesende Speicherleuchtstoffplatte 1 bewegt. Das Ablenkelement 4 weist eine reflektierende Fläche, insbesondere in Form eines Spiegels, auf, welche durch eine Antriebseinrichtung 5 in Oszillation versetzt wird. Alternativ kann das Ablenkelement 4 einen Polygonspiegel aufweisen, welcher durch die Antriebseinrichtung 5, in diesem Fall ein Motor, in Rotation versetzt wird und den Stimulationslichtstrahl 3 über die Speicherleuchtstoffplatte 1 lenkt.

Während der Bewegung des abgelenkten Stimulationslichtstrahls 3' über die Speicherleuchtstoffplatte 1 sendet diese in Abhängigkeit der darin gespeicherten Röntgeninformation Emissionslicht aus, welches von einer optischen Sammeleinrichtung 6, beispielsweise einem Lichtleiterbündel oder einer geeigneten Spiegeleinrichtung, gesammelt und von einem optischen Detektor 7, vorzugsweise einem Photomultiplier (PMT), erfasst und dabei in ein entsprechendes Detektorsignal S umgewandelt wird. Vor dem PMT ist vorzugsweise ein (nicht dargestellter) optischer Filter angeordnet, welcher für das Emissionslicht im Wesentlichen durchlässig ist und welcher Stimulationslicht, das bei Bestrahlung der Speicherleuchtstoffplatte an dieser teilweise gestreut wird und über die optische Sammeleinrichtung 6 zum PMT gelangen würde, stark abschwächt.

Das Detektorsignal S wird einer Verarbeitungseinrichtung 16 zugeführt, in welcher Bildsignalwerte B für einzelne Bildpunkte des ausgelesenen Röntgenbildes abgeleitet werden. Soll die ausgelesene Zeile 8 beispielsweise aus 1000 Bildpunkten zusammengesetzt sein, so werden aus dem beim Auslesen der Zeile 8 erhaltenen Detektorsignal S 1000 entsprechende Bildsignalwerte B abgeleitet.

Durch einen Transport der Speicherleuchtstoffplatte 1 in Transportrichtung T mittels einer Transporteinrichtung (nicht dargestellt) wird ein sukzessives Auslesen einzelner Zeilen 8 der Speicherleuchtstoffplatte 1 erreicht und damit ein zweidimensionales, aus einzelnen Bildpunkten mit jeweils einem zugehörigen Bildsignalwert B zusammengesetztes Röntgenbild erhalten. Beträgt die Anzahl der in Transportrichtung T ausgelesenen Zeilen 8 beispielsweise 1500, so werden mit jeweils 1000 Bildpunkten pro Zeile 8 für das ausgelesene Röntgenbild insgesamt 1500 mal 1000 Bildpunkte mit jeweils einem zugehörigen Bildsignalwert B erhalten.

Grundsätzlich ist es auch möglich, die Speicherleuchtstoffplatte 1 ortsfest zu lagern und die restlichen Komponenten, insbesondere Laser 2, Ablenkelement 4, Sammeleinrichtung 6 und Detektor 7, relativ zur Speicherleuchtstoffplatte 1 zu bewegen.

Das Detektorsignal S wird zunächst durch ein Tiefpassfilter 12 gefiltert, wobei höherfrequente Anteile des Detektorsignals S, insbesondere Rauschanteile, eliminiert werden. Das gefilterte Detektorsignal S wird dann einem Analog-Digital-Wandler 13 zugeführt und dort mit einer Abtastfrequenz f abgetastet, wobei bei jedem Abtastvorgang ein Detektorsignal D in jeweils digitalen Einheiten erhalten wird. Das Abtasten des Detektorsignals S im Analog-Digital-Wandler 13 erfolgt vorzugsweise nach dem sogenannten Sample-and-Hold-Prinzip, wonach beim Abtasten die jeweils aktuelle analoge Signalhöhe des zu einem Abtastzeitpunkt am Analog-Digital-Wandler 13 anliegenden Detektorsignals S gehalten und in einem entsprechenden digitalen Detektorsignalwert D umgewandelt wird. Nach einer Zwischenspeicherung im Speicher 14 werden in einer Steuerungseinheit 15 aus den Detektorsignalwerten D die Bildsignalwerte B berechnet.

Die Steuerungseinheit 15 ist mit der Antriebseinrichtung 5 zum Antrieb des Ablenkelements 4 verbunden und steuert dieses in der Weise, dass das Ablenkelement 4 durch Abgabe von Abtriebsenergie von der Antriebseinrichtung 5 nur dann aktiv angetrieben wird, wenn oder nachdem der abgelenkte Stimulationslichtstrahl 3' eine bestimmte Richtung und/oder Position eingenommen hat, beispielsweise wenn der abgelenkte Stimulationslichtstrahl 3' einen an einer der beiden Längsseiten der Speicherleuchtstoffplatte befindlichen Sensor (nicht dargestellt) überstreicht, woraufhin dieser einen elektrischen Puls an die Steuerungseinheit 15 sendet, die - ggf. nach einer vorgebbaren Zeitverzögerung - die Antriebseinrichtung 5 dann in der Weise steuert, dass diese zeitweise Antriebsenergie, insbesondere in Form eines Antriebsenergiepulses, an das oszillierende Ablenkelement 4 abgibt und dabei dessen Oszillation, vorzugsweise im Bereich einer Resonanzfrequenz des Ablenkelements 4, aufrechterhält.

An der Speicherleuchtstoffplatte 1 ist eine Markierung 20 derart angeordnet, dass diese während des Transports der Speicherleuchtstoffplatte 1 in Transportrichtung T in den Bereich der Zeile 8 kommt. Dort trifft der abgelenkte Stimulationslichtstrahl 3' auf die Markierung 20 und wird von dieser zumindest teilweise reflektiert bzw. gestreut und/oder regt diese zur Abgabe von Lumineszenzlicht an. Das hierbei reflektierte bzw. gestreute Stimulationslicht bzw. abgegebene Lumineszenzlicht wird - wie das in der Speicherleuchtstoffplatte 1 angeregte Emissionslicht - von der optischen Sammeleinrichtung 6 gesammelt, zum optischen Detektor 7 weitergeleitet und dort in ein entsprechendes Detektorsignal S umgewandelt. Aus dem Detektorsignal S wird - nach entsprechender Signalverarbeitung - in der Steuerungseinheit 15 eine Markierungsinformation abgeleitet, anhand welcher die Steuerungseinheit 15 den Auslesevorgang der Speicherleuchtstoffplatte 1 und/oder die anschließende Verarbeitung der ausgelesenen Röntgeninformationen, insbesondere in Form der Detektorsignalwerte D und/oder der Bildsignalwerte B, steuert.

Die in der Markierung 20 enthaltenen Markierungsinformationen beziehen sich beispielsweise auf für die Speicherleuchtstoffplatte 1 spezifische Parameter, wie z.B. die Größe der Speicherleuchtstoffplatte 1, die Empfindlichkeit der Speicherleuchtstoffplatte 1 für Röntgenstrahlung, das Herstellungsdatum und/oder ein Verfallsdatum der Speicherleuchtstoffplatte 1, eine Identifikationsnummer zur eindeutigen Identifizierung der Speicherleuchtstoffplatte 1, den Beginn der Speicherleuchtstoffplatte 1 ("Begin of Image Plate", BOIP), den Beginn des auszulesenden Bereichs ("Begin of Scan", BOS) bzw. die jeweils abzutastende Zeile ("Begin of Line", BOL) der Speicherleuchtstoffplatte 1.

Im dargestellten Beispiel der Vorrichtung ist unterhalb und im Wesentlichen parallel zu der Zeile 8, entlang welcher der abgelenkte Stimulationslichtstrahl 3' über die Speicherleuchtstoffplatte 1 geführt wird, eine weitere Markierung 30 vorgesehen. Die Markierung 30 ist vorzugsweise auf einer Unterlage 35 aufgebracht, die derart in der Vorrichtung angeordnet ist, dass die Speicherleuchtstoffplatte 1 relativ zur Markierung 30 einerseits und zu den Komponenten 2 bis 7 der Ausleseeinrichtung andererseits in Transportrichtung T transportiert werden kann. Der abgelenkte Stimulationslichtstrahl 3' trifft dadurch auf die Markierung 30, wenn sich die Speicherleuchtstoffplatte 1 noch nicht oder nicht mehr im Bereich der Zeile 8 befindet, d.h. vor Beginn oder nach Beendigung des Auslesevorgangs.

Im dargestellten Beispiel ist die Markierung 30 breiter als die Speicherleuchtstoffplatte 1 und ragt an beiden Seiten der Speicherleuchtstoffplatte 1 über diese hinaus. Dadurch kann der abgelenkte Stimulationslichtstrahl 3' auf die überstehenden Bereiche der Markierung 30 treffen, wenn sich eine Speicherleuchtstoffplatte 1 während des Auslesevorgangs zwischen der Markierung 30 einerseits und den Komponenten 2 bis 7 der Ausleseeinrichtung andererseits befindet.

Das auf die Markierung 30 treffende Stimulationslicht 3' wird zumindest teilweise reflektiert bzw. gestreut und/oder regt die Markierung 30 zur Abgabe von Lumineszenzlicht an. Wie im Falle der auf der Speicherleuchtstoffplatte 1 befindlichen Markierung 20 wird auch bei der in der Vorrichtung vorgesehenen Markierung 30 das reflektierte Stimulationslicht bzw. abgegebene Lumineszenzlicht von der optischen Sammeleinrichtung 6 gesammelt, zum optischen Detektor 7 weitergeleitet und dort in ein entsprechendes Detektorsignal S umgewandelt, aus welchem in der Steuerungseinheit 15 eine Markierungsinformation abgeleitet wird, die zur Steuerung des Auslesevorgangs der Speicherleuchtstoffplatte 1 und/oder der Verarbeitung der ausgelesenen Röntgeninformationen herangezogen wird.

Die anhand der Markierung 30 abgeleiteten Markierungsinformationen lassen u.a. Rückschlüsse zu über die Lage der auszulesenden Speicherleuchtstoffplatte 1 relativ zu den Komponenten 2 bis 7 der Ausleseeinrichtung, das zeitliche Verhalten des entlang der Zeile 8 bewegten abgelenkten Stimulationslichtstrahls 3' oder eine mögliche zeitliche Veränderung der Empfindlichkeit der Vorrichtung, insbesondere der Komponenten 2 bis 7 der Ausleseeinrichtung, beim Auslesen einer Zeile 8 der Speicherleuchtstoffplatte.

Die Markierungen 20 und 30 sind in dem in Figur 1 gezeigten Beispiel nur stark schematisiert wiedergegeben. Je nach Anordnung, Ausgestaltung und Informationsinhalt der jeweiligen Markierung 20 bzw. 30 wird anhand der daraus abgeleiteten Markierungsinformationen das Auslesen der Speicherleuchtstoffplatte 1 bzw. die Verarbeitung der beim Auslesen erhaltenen Röntgeninformationen in unterschiedlicher Weise gesteuert. Dies wird im Folgenden näher beschrieben.

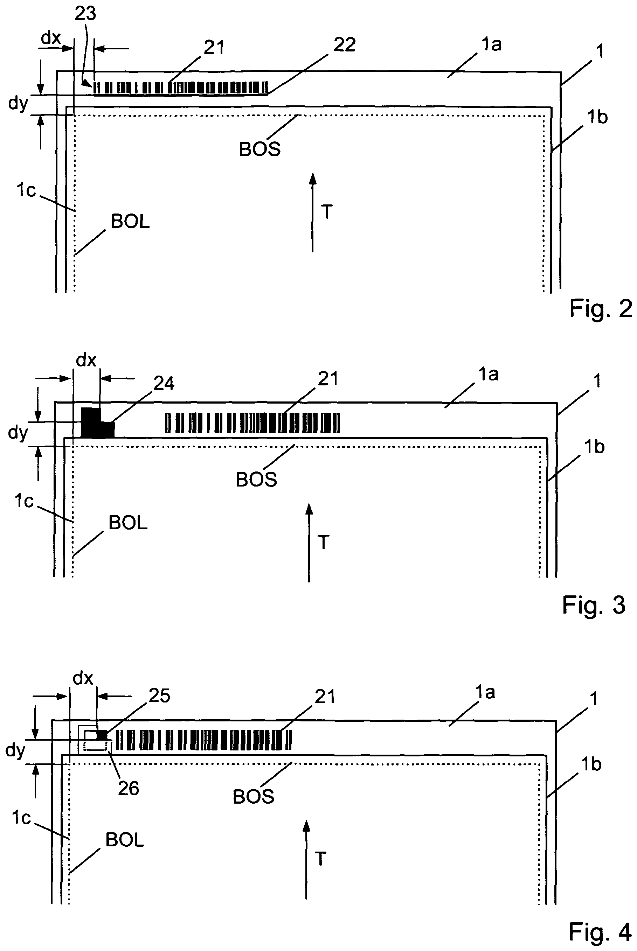

Figur 2 zeigt ein erstes Beispiel von auf einer Speicherleuchtstoffplatte 1 befindlichen Markierungen in Form eines Strichcodes 21 aus unterschiedlich dicken Strichen und Lücken sowie in Form einer senkrecht zu den Strichen und Lücken des Strichcodes 21 verlaufenden Geraden 22. Die Speicherleuchtstoffplatte 1 weist eine Trägerschicht 1a auf, auf welcher eine Speicherleuchtstoffschicht 1b aufgebracht ist. Die Speicherleuchtstoffschicht 1b erstreckt sich vorzugsweise nicht über die gesamte Fläche der Trägerschicht 1a, so dass - wie im dargestellten Beispiel gezeigt - ein Randbereich der Trägerschicht 1a keine Speicherleuchtstoffschicht aufweist. In diesem Randbereich der Trägerschicht 1a sind die Markierungen in Form des Strichcodes 21 sowie der Geraden 22 aufgebracht.

Im Strichcode 21 können unterschiedliche Informationen codiert sein, die insbesondere die Speicherleuchtstoffplatte 1 betreffen, wie beispielsweise die Größe der Speicherleuchtstoffplatte, die Empfindlichkeit der Speicherleuchtstoffplatte 1 für Röntgenstrahlung, eine Identifikationsnummer zur eindeutigen Identifizierung der Speicherleuchtstoffplatte 1 sowie ein Herstellungs- und/oder Verfallsdatum der Speicherleuchtstoffplatte 1.

Einer der Striche 23 des Strichcodes 21 dient im dargestellten Beispiel als Referenzmarkierung zur Festlegung eines Randes der auszulesenden Fläche 1c der Speicherleuchtstoffschicht 1b. Im vorliegenden Beispiel ist der linke Rand des auszulesenden Bereichs 1c um einen vorgegebenen Abstand dx vom Strich 23 beabstandet. Bei einem Transport der Speicherleuchtstoffplatte 1 im Transportrichtung T überstreicht der abgelenkte Stimulationslichtstrahl 3' (siehe Figur 1) die Speicherleuchtstoffplatte 1 in einer senkrecht zur Transportrichtung T verlaufenden Richtung Zeile für Zeile. Aus diesem Grund kann der linke Rand des auszulesenden Bereichs 1c der Speicherleuchtstoffschicht 1b auch als Begin of Line (BOL) bezeichnet werden.

Die zusätzlich zum Strichcode 21 vorgesehene Gerade 22 dient im dargestellten Beispiel als Referenz zur Festlegung des vorderen Randes der auszulesenden Fläche 1c der Speicherleuchtstoffschicht 1b. Dieser, in Transportrichtung T betrachtet, führende Rand der auszulesenden Fläche 1c wird auch als Begin of Scan (BOS) bezeichnet und ist im vorliegenden Fall um einen vorgegebenen Abstand dy von der Geraden 22 beabstandet.

Figur 3 zeigt ein zweites Beispiel von auf einer Speicherleuchtstoffplatte 1 befindlichen Markierungen in Form eines Strichcodes 21 sowie einer L-förmigen Struktur 24. Die Festlegung des linken Randes BOL sowie des vorderen Randes BOS der auszulesenden Fläche 1c der Speicherleuchtstoffschicht 1d erfolgt bei diesem Beispiel anhand von parallel zum linken Rand BOL bzw. vorderen Rand BOS des auszulesenden Bereichs 1c verlaufenden Schenkeln der L-förmigen Struktur 24. Analog zu dem in Figur 2 gezeigten Beispiel ist der linke Rand BOL bzw. vordere Rand BOS um jeweils einen vorgegebenen Abstand dx bzw. dy vom entsprechenden Schenkel der L-förmigen Struktur 24 beabstandet. Im Übrigen gelten die Ausführungen im Zusammenhang mit dem in Figur 2 gezeigten Beispiel entsprechend.

Figur 4 zeigt ein drittes Beispiel von auf einer Speicherleuchtstoffplatte 1 befindlichen Markierungen in Form eines Strichcodes 21 sowie einer flächigen Struktur 25, insbesondere in Form eines Quadrates oder Rechtecks, welche von einer L-förmigen Abdeckung 26 teilweise abgedeckt wird. Hierbei ist die flächige Struktur 25 vorzugsweise fluoreszierend und die Abdeckung 26 reflektierend und/oder lichtstreuend ausgestaltet. Alternativ kann die Abdeckung 26 aber auch ein Teil der Speicherleuchtstoffschicht 1b sein.

In beiden Fällen werden beim Abtasten der mit der Abdeckung 26 teilweise abgedeckten flächigen Struktur 25 mittels des abgelenkten Stimulationslichtstrahls 3' und beim Erfassen des hierbei von der flächigen Struktur 25 bzw. der Abdeckung 26 emittierten bzw. reflektierten Lichts die Bezugskanten ermittelt, welche zur Festlegung des linken bzw. vorderen Randes BOL bzw. BOS des auszulesenden Bereichs 1c der Speicherleuchtstoffschicht 1b dienen. Die Ausführungen im Zusammenhang mit den in den Figuren 2 und 3 gezeigten Beispielen gelten hierbei entsprechend.

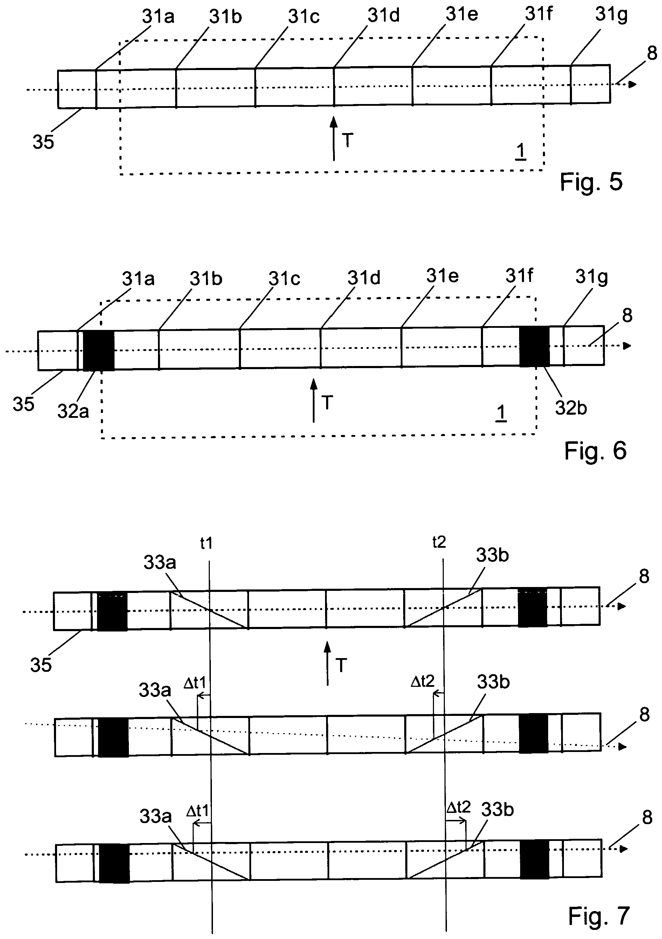

Figur 5 zeigt ein erstes Bespiel von Markierungen in Form von fluoreszierenden Strichen 31a bis 31g, die auf einer in der Vorrichtung angeordneten Unterlage 35 aufgebracht sind, im Wesentlichen parallel zur Transportrichtung T der gestrichelt angedeuteten Speicherleuchtstoffplatte 1 verlaufen und nebeneinander in Richtung der durch den abgelenkten Stimulationslichtstrahl 3' (siehe Fig. 1) abgetasteten Zeile 8 angeordnet sind.

Während des Auslesevorgangs der Speicherleuchtstoffplatte 1 deckt diese die fluoreszierenden Striche 31b bis 31f ab, so dass der abgelenkte Stimulationslichtstrahl 3' lediglich auf die fluoreszierenden Striche 31a und 31d treffen kann. Das in diesen Strichen angeregte Fluoreszenzlicht wird vom Detektor 7 der Vorrichtung erfasst, wobei anhand der jeweiligen Zeitpunkte, in denen ein Fluoreszenzlichtsignal erhalten wird, festgestellt werden kann, ob die mittlere Geschwindigkeit des Stimulationslichtstrahls 3' von einem vorgegebenen Wert abweicht. Je nach Art und Größe der Abweichung werden in der Verarbeitungseinrichtung 16 die beim Auslesen der Speicherleuchtstoffschicht 1 erhaltenen Detektorsignalwerte D den einzelnen Bildsignalwerten B zugeordnet. Auf diese Weise können Geschwindigkeitsschwankungen während der Bewegung des Stimulationslichtstrahls 3' entlang der Zeile 8 beim Auslesen der Speicherleuchtstoffplatte 1 korrigiert werden. Diese Korrektur wird auch als Jitterkorrektur bezeichnet.

Wenn die fluoreszierenden Striche 31b bis 31f nicht durch eine in der Vorrichtung befindliche Speicherleuchtstoffplatte 1 verdeckt werden, beispielsweise vor dem Auslesevorgang einer Speicherleuchtstoffplatte 1 oder nach dessen Beendigung, kann eine sogenannte Geometrie-Kalibrierung vorgenommen werden, indem auch das von den Strichen 31b bis 31f emittierte Fluoreszenzlicht vom Detektor 7 erfasst wird. Anhand der hierbei zu unterschiedlichen Zeitpunkten erhaltenen Fluoreszenzlichtsignale kann das zeitliche Verhalten des Stimulationslichtstrahls 3' während des Durchlaufens der Zeile 8 mit besonders hoher Genauigkeit ermittelt und gespeichert werden. Die bei einem nachfolgenden oder vorausgegangenen Auslesevorgang erhaltenen Detektorsignalwerte D können unter Heranziehung der hierbei ermittelten Fluoreszenzlichtsignale mit besonders hoher Genauigkeit den entsprechenden Bildsignalwerten B zugeordnet werden.

Figur 6 zeigt ein zweites Beispiel von in der Vorrichtung vorgesehenen Markierungen in Form von fluoreszierenden Strichen 31a bis 31g sowie zusätzlichen flächigen Bereichen 32a und 32b, die ebenfalls durch Beaufschlagung mit Stimulationslicht zur Abgabe von Fluoreszenzlicht angeregt werden können. Wenn sich eine Speicherleuchtstoffplatte 1 in der Vorrichtung befindet und dabei die flächigen Bereiche 32a und 32b teilweise verdeckt, kann der Stimulationslichtstrahl 3' lediglich die über die Speicherleuchtstoffplatte 1 hinausragenden Abschnitte der flächigen Bereiche 32a bzw. 32b zur Aussendung von Fluoreszenzlicht anregen. Anhand der hierbei ermittelten Breite der fluoreszierenden Abschnitte links bzw. rechts von der Speicherleuchtstoffplatte 1 kann auf die Lage der Speicherleuchtstoffplatte relativ zur Vorrichtung, d.h. zur Lichtquelle 2 einschließlich Ablenkeinrichtung 4 sowie Detektor 7 einschließlich optischer Sammeleinrichtung 6, geschlossen werden. Die auf diese Weise ermittelten Informationen hinsichtlich der Lage der Speicherleuchtstoffplatte 1 in der Vorrichtung werden vorzugsweise bei der Verarbeitung der beim Auslesen der Speicherleuchtstoffplatte 1 erhaltenen Röntgeninformationen herangezogen. Sie werden insbesondere zur korrekten Berücksichtigung der bei der oben beschriebenen Geometrie-Kalibrierung ermittelten Informationen herangezogen. Im Übrigen gelten die Erläuterungen im Zusammenhang mit dem in Figur 5 gezeigten Beispiel entsprechend.

Figur 7 zeigt ein drittes Beispiel von in der Vorrichtung vorgesehenen Markierungen in Form von schrägen Linien 33a und 33b, welche vorzugsweise ebenfalls fluoreszierend ausgestaltet sind. Für die übrigen Markierungen in Form von fluoreszierenden Strichen bzw. flächigen Bereichen gelten die obigen Ausführungen im Zusammenhang mit den in den Figuren 5 und 6 gezeigten Beispielen entsprechend.

Im oberen Teil der Figur 7 verläuft die Zeile 8 des Stimulationslichtstrahls im Wesentlichen senkrecht zur Transportrichtung T und regt die schrägen Linien 33a und 33b zu den Zeitpunkten t1 bzw. t2 zur Emission von Fluoreszenzlicht an, welches vom Detektor 7 (siehe Fig. 1) erfasst wird.

Für den im mittleren Teil der Figur 7 gezeigten Fall, in dem der Stimulationslichtstrahl dejustiert ist und nicht exakt senkrecht, sondern schräg zur Transportrichtung T der Speicherleuchtstoffplatte 1 verläuft, trifft der Stimulationslichtstrahl jeweils um eine Zeitspanne Δt1 bzw. Δt2 früher auf die schrägen Linien 33a bzw. 33b, so dass der Detektor 7 bereits zu diesen Zeitpunkten entsprechende Fluoreszenzlichtsignale erzeugt. Aus dem jeweiligen zeitlichen Versatz lässt sich auf das Ausmaß der Dejustage des Stimulationslichtstrahls schließen und eine entsprechende Korrektur der bei einem solchen Auslesevorgang erhaltenen Detektorsignalwerte D bzw. Bildsignalwerte B vornehmen.

Im unteren Teil der Figur 7 ist ein Fall dargestellt, in dem der Stimulationslichtstrahl zwar senkrecht zur Transportrichtung T der Speicherleuchtstoffptatte 1 verläuft, jedoch in Richtung der Transportrichtung T parallel versetzt ist. Auch in diesem Fall sind die durch Anregung der fluoreszierenden schrägen Linien 33a bzw. 33b erhaltenen Fluoreszenzlichtsignale ebenfalls um entsprechende Zeitspannen Δt1 bzw. Δt2 gegenüber einem korrekt justierten Stimulationslichtstrahl (vgl. oberer Teil der Figur) versetzt. Aus dem zeitlichen Versatz kann auf Art und Ausmaß der Dejustage des Stimulationslichtstrahls geschlossen werden und diese bei der Verarbeitung, d.h. Korrektur, der beim Auslesen einer Speicherleuchtstoffplatte 1 erhaltenen Detektorsignalwerte D bzw. Bildsignalwerte B berücksichtigt werden.

Anhand der auf diese Weise ermittelten Dejustage des Stimulationslichtstrahls kann aber nicht nur beim eigentlichen Betrieb der Vorrichtung eine korrekte Justage der optischen Komponenten vorgenommen werden, sondern auch bei der Herstellung und/oder Wartung der Vorrichtung.

Eine Justage kann grundsätzlich manuell vorgenommen werden, kann aber auch automatisch erfolgen, beispielsweise mittels entsprechender Aktuatoren, welche die entsprechenden optischen Komponenten justieren.

Bei den zu justierenden optischen Komponenten handelt es sich insbesondere um den Laser 2, das Ablenkelement 4 (siehe Fig. 1) sowie etwaige Abbildungsoptiken (nicht dargestellt) zwischen Laser 2 und Ablenkelement 4 und/oder zwischen Ablenkelement 4 und der Speicherleuchtstoffplatte 1 bzw. den in der Vorrichtung vorgesehenen Markierungen 30 bis 33.

Wie bereits erläutert, sind die im Zusammenhang mit den beschriebenen Beispielen gezeigten Markierungen 20 bis 26 und 30 bis 33 in der Weise ausgebildet, dass sie das auf sie treffende Stimulationslicht reflektieren bzw. durch das Stimulationslicht zur Emission von Lumineszenzlicht, d.h. Phosphoreszenz oder Fluoreszenzlicht, angeregt werden können.

Reflektierende oder lichtstreuende Markierungen werden beispielsweise mittels Lacken, Tinten, Gravuren oder Beschichtungen erzeugt, mit denen entsprechende Muster auf die Speicherleuchtstoffplatte 1 bzw. in der Vorrichtung auf- oder eingebracht werden. Die Eigenschaften der verwendeten Lacke, Tinten, Gravuren bzw. Beschichtungen im Hinblick auf die Reflexion und/oder Streuung des Stimulationslichts weichen von denen des Untergrundes, insbesondere der Trägerschicht 1a der Speicherleuchtstoffplatte 1, ab, so dass ein die Markierung überstreichender Stimulationslichtstrahl 3' unterschiedlich stark reflektiert bzw. gestreut wird.

Das durch das Muster unterschiedlich gestreute bzw. reflektierte Licht wird vom Detektor 7 (siehe Fig. 1) erfasst, wobei der Detektor 7 vorzugsweise mit einem Filter versehen ist, welcher für das in der Speicherleuchtstoffplatte 1 angeregte Emissionslicht - vorzugsweise im blauen Spektralbereich - im Wesentlichen durchlässig ist und das beim Auslesen der Speicherleuchtstoffplatte1 gestreute Stimulationslicht - vorzugsweise im roten Spektralbereich - stark abschwächt. Bei der Erfassung des von der Markierung reflektierten bzw. gestreuten Stimulationslichts wird dieses von dem Filter ebenfalls stark abgeschwächt; die Reflexion bzw. Streuung des Stimulationslichts durch die Markierung ist jedoch durch eine geeignete Wahl von beispielsweise Lacken, Tinten, Gravuren oder Beschichtungen so groß, dass trotz starker Lichtabschwächung durch den Filter vor dem Detektor 7 dieser noch ausreichend viel Stimulationslicht empfängt, um ein ausreichend hohes Detektorsignal D zu erzeugen, das eine zuverlässige Ableitung der Markierungsinformationen erlaubt.

Alternativ oder zusätzlich kann während des Abtastens der Markierungen die Leistung der Lichtquelle 2 und damit die Intensität des Simulationslichtstrahls 3' und/oder die Empfindlichkeit des Detektors 7, beispielsweise durch Erhöhung der am PMT anliegenden Spannung, vorübergehend erhöht werden. Dadurch wird gewährleistet, dass der Detektor 7 das reflektierte bzw. gestreute und ggf. durch den Filter geschwächte Stimulationslicht mit besonders hoher Zuverlässigkeit erfassen und in entsprechende Detektorsignale D umwandeln kann.

Lumineszierende, insbesondere fluoreszierende, Markierungen werden beispielsweise durch Aufbringen bestimmter lumineszierender Substanzen auf die Speicherleuchtstoffplatte 1, insbesondere auf die Trägerschicht 1a, bzw. in der Vorrichtung erzeugt. Vorzugsweise emittieren diese Substanzen Emissionslicht in einem Wellenlängenbereich, in welchem ein vor dem Detektor 7 befindlicher Filter eine höhere Durchlässigkeit aufweist als im Wellenlängenbereich des Stimulationslichts. Der Wellenlängenbereich des von diesem Substanzen emittierten Emissionslichts kann gegenüber dem Stimulationslicht zu größeren Wellenlängen hin (z.B. aufgrund eines Stokes-Effekts) oder auch zu kürzeren Wellenlängen hin (z.B. aufgrund eines Anti-Stokes-Effekts oder von Mehrphotonen-Effekten) hin verschoben sein.

Darüber hinaus eignen sich für die Erzeugung einer lumineszierenden Markierung Substanzen, die eine sog. aktivierte Phosphoreszenz zeigen. Diese Substanzen werden durch Bestrahlung mit Licht, z.B. nach Beendigung eines Auslesevorgangs der Speicherleuchtstoffplatte 1 durch Bestrahlung mit beispielsweise grünem und/oder rotem Löschlicht in einer in der Vorrichtung befindlichen Löscheinheit, aktiviert - sozusagen "aufgeladen" - und können beim nächsten Auslesevorgang mittels des Stimulationslichts zur Abgabe von Emissionslicht angeregt werden, welches in einem Wellenlängenbereich unterhalb des Stimulationslichts liegt.

## Patentansprüche

1. System zum Auslesen von in einer Speicherleuchtstoffplatte (1) gespeicherten Röntgeninformationen mit
einer Speicherleuchtstoffplatte (1), in welcher Röntgeninformationen gespeichert werden können,
einer Vorrichtung zum Auslesen von in der Speicherleuchtstoffplatte (1) gespeicherten Röntgeninformationen mit einer Lichtquelle (2) zur Erzeugung von Stimulationslicht (3), welches die Speicherleuchtstoffplatte (1) zur Aussendung von erstem Emissionslicht anregen kann, und einem Detektor (7) zum Erfassen des von der Speicherleuchtstoffplatte (1) ausgesandten ersten Emissionslichts, und
mindestens einer an der Speicherleuchtstoffplatte (1) vorgesehenen Markierung (20 - 26), welche eine Markierungsinformation enthält und derart angeordnet und ausgebildet ist, dass Stimulationslicht (3) auf die Markierung (20 - 26) auftreffen und von der Markierung (20 - 26) zumindest teilweise reflektiert und/oder gestreut werden kann und/oder die Markierung (20 - 26) zur Abgabe von zweitem Emissionslicht, insbesondere Lumineszenzlicht, anregen kann, wobei das reflektierte bzw. gestreute Stimulationslicht (3) bzw. das abgegebene zweite Emissionslicht vom Detektor (7) erfasst und daraus die in der Markierung enthaltene Markierungsinformation abgeleitet werden kann,
**gekennzeichnet durch**
eine Steuerungseinrichtung (15), die dazu eingerichtet ist, das Auslesen der Speicherleuchtstoffplatte (1) und/oder eine Verarbeitung der ausgelesenen Röntgeninformationen anhand der in der Markierung enthaltenen Markierungsinformation zu steuern, wobei die Markierungsinformation eine die Speicherleuchtstoffplatte (1) betreffende Information enthält welche mindestens eine der folgenden Informationen enthält:
- Größe der Speicherleuchtstoffplatte (1),
- Herstellungs- und/oder Verfallsdatum der Speicherleuchtstoffplatte (1),
- Beginn der auszulesenden Speicherleuchtstoffplatte (BOIP),
- Beginn (BOS) eines auszulesenden Bereichs (1c) der Speicherleuchtstoffplatte (1),
- Beginn (BOL) einer auszulesenden Zeile auf der Speicherleuchtstoffplatte.

2. System nach Anspruch 1, wobei sich die Markierungsinformation ferner auf mindestens eine der folgenden Informationen bezieht:
- Empfindlichkeit der Speicherleuchtstoffplatte (1) für Röntgenstrahlung,
- Identifikationsnummer der Speicherleuchtstoffplatte (1),
- einen definierten räumlichen Abstand auf der Speicherleuchtstoffplatte (1).

3. System nach einem der vorangehenden Ansprüche, wobei die Markierungsinformation eine den Auslesevorgang der Speicherleuchtstoffplatte (1) betreffende Information enthält.

4. System nach Anspruch 3, wobei sich die Markierungsinformation ferner auf mindestens eine der folgenden Informationen bezieht:
- Lage der Speicherleuchtstoffplatte (1) in der Vorrichtung während des Auslesens,
- zeitliches Verhalten eines während des Auslesens entlang einer Zeile (8) bewegten Stimulationslichtstrahls (3'),
- zeitliche Veränderung der Empfindlichkeit der Vorrichtung beim Auslesen einer Zeile (8) der Speicherleuchtstoffplatte (1) für das von dieser ausgesandte erste Emissionslicht.

5. System nach einem der vorangehenden Ansprüche, wobei die Speicherleuchtstoffplatte (1) eine Trägerschicht (1a) und eine auf einer ersten Seite der Trägerschicht (1a) aufgebrachte Speicherleuchtstoffschicht (1b) aufweist und sich die Markierung (20 - 26) auf der ersten Seite der Trägerschicht (1a) befindet.

6. System nach Anspruch 5, wobei sich die Markierung (20 - 26) in einem außerhalb der Speicherleuchtstoffschicht (1b) liegenden Bereich der Trägerschicht (1a) befindet.

7. System nach Anspruch 5 oder 6, wobei die Markierung (20 - 26) die Form eines Strichcodes (21) aufweist, in welchem Daten in Form von unterschiedlich breiten Strichen und Lücken kodiert sind.

8. System nach einem der Ansprüche 5 bis 7, wobei die Markierung (20 - 26) mindestens eine Kennzeichnung, insbesondere in Form von Punkten, Linien (22, 23) oder zweidimensionalen Formen (24 - 26), umfasst, durch deren Form und/oder Lage auf der ersten Seite der Trägerschicht (1a) die Markierungsinformation bestimmt wird.

9. System nach einem der Ansprüche 1 bis 4, wobei eine Markierung (30 - 33) derart in der Vorrichtung angeordnet ist, dass ein von der Lichtquelle (2) erzeugter Stimulationslichtstrahl (3') auf diese Markierung (30 - 33) auftreffen kann, bevor und/oder nachdem der Stimulationslichtstrahl (3') während des Auslesens auf die Speicherleuchtstoffplatte (1) trifft.

10. System nach einen der vorangehenden Ansprüche, wobei die Markierung (20 - 26; 30 - 33) das Stimulationslicht zumindest in Teilbereichen der Markierung (20 - 26; 30 - 33) stärker reflektiert und/oder stärker streut als die Speicherleuchtstoffplatte (1).

11. System nach einem der vorangehenden Ansprüche, wobei die Empfindlichkeit des Detektors (7), gegebenenfalls einschließlich eines vor dem Detektor (7) befindlichen Filters, für das von der Markierung (20 - 26; 30 - 33) abgegebene zweite Emissionslicht höher ist als für das Stimulationslicht.

12. Verfahren zum Auslesen von in einer Speicherleuchtstoffplatte (1) gespeicherten Röntgeninformationen in einer Vorrichtung, bei welchem eine Speicherleuchtstoffplatte (1) mit dem von einer Lichtquelle (2) erzeugten Stimulationslicht (3) zur Aussendung von erstem Emissionslicht angeregt wird, welches von einem Detektor (7) erfasst wird, wobei das von der Lichtquelle (2) erzeugte Stimulationslicht (3) auf mindestens eine an der Speicherleuchtstoffplatte (1) vorgesehene Markierung (20 - 26), welche eine Markierungsinformation enthält, trifft und dabei von der Markierung (20 - 26) zumindest teilweise reflektiert und/oder gestreut wird und/oder die Markierung (20 - 26) zur Abgabe von zweitem Emissionslicht, insbesondere Lumineszenzlicht, anregt und das reflektierte bzw. gestreute Stimulationslicht (3) bzw. abgegebene zweite Emissionslicht vom Detektor (7) erfasst und daraus die in der Markierung enthaltene Markierungsinformation abgeleitet wird,
**dadurch gekennzeichnet, dass**
das Verfahren weiter umfasst:
Steuern des Auslesens der Speicherleuchtstoffplatte (1) und/oder einer Verarbeitung der ausgelesenen Röntgeninformationen anhand der in der Markierung enthaltenen Markierungsinformation, wobei die Markierungsinformation eine die Speicherleuchtstoffplatte (1) betreffende Information enthält, welche mindestens eine der folgenden Informationen enthält:
- Größe der Speicherleuchtstoffplatte (1),
- Herstellungs- und/oder Verfallsdatum der Speicherleuchtstoffplatte (1),
- Beginn der auszulesenden Speicherleuchtstoffplatte (BOIP),
- Beginn (BOS) eines auszulesenden Bereichs (1c) der Speicherleuchtstoffplatte (1),
- Beginn (BOL) einer auszulesenden Zeile auf der Speicherleuchtstoffplatte.

13. Speicherleuchtstoffplatte (1) zur Verwendung in einem Verfahren nach Anspruch 12 mit mindestens einer Markierung (20 - 26), welche eine Markierungsinformation enthält und derart angeordnet und ausgebildet ist, dass auf die Markierung (20 - 26) auftreffendes Stimulationslicht (3), welches die Speicherleuchtstoffplatte (1) zur Aussendung von erstem Emissionslicht anregen kann, die Markierung (20 - 26) zur Abgabe von zweitem Emissionslicht, insbesondere Lumineszenzlicht, anregen kann,
**dadurch gekennzeichnet, dass**
die Markierungsinformation eine die Speicherleuchtstoffplatte (1) betreffende Information enthält und sich auf mindestens eine der folgenden Informationen bezieht:
- Größe der Speicherleuchtstoffplatte (1),
- Herstellungs- und/oder Verfallsdatum der Speicherleuchtstoffplatte (1),
- Beginn der auszulesenden Speicherleuchtstoffplatte (BOIP),
- Beginn (BOS) eines auszulesenden Bereichs (1c) der Speicherleuchtstoffplatte (1),
- Beginn (BOL) einer auszulesenden Zeile auf der Speicherleuchtstoffplatte.

## Claims

1. System for reading out X-ray information stored in a storage phosphor plate (1), comprising
a storage phosphor plate (1) in which X-ray information can be stored,
a device for reading out X-ray information stored in the storage phosphor plate (1) with a light source (2) for generating stimulating light (3) that can stimulate the storage phosphor plate (1) to emit first emission light, and a detector (7) for detecting the first emission light emitted by the storage phosphor plate (1), and
at least one marking (20 - 26) which is provided at the storage phosphor plate (1), which contains marking information and which is arranged and configured in such a way that stimulating light (3) can impinge on the marking (20 - 26) and can be at least partially reflected and/or scattered by the marking (20 - 26) and/or can stimulate the marking (20 - 26) to emit second emission light, in particular luminescent light, wherein the reflected and/or scattered stimulating light (3) and/or the emitted second emission light, respectively, is detected by the detector (7) and the marking information contained in the marking can be derived therefrom,
**characterized by**
a control device (15) which is configured to control the reading out of the storage phosphor plate (1) and/or a processing of the read out X-ray information based on the marking information contained in the marking,
wherein the marking information contains information which relates to the storage phosphor plate (1) and which contains at least one of the following items of information:
- the size of the storage phosphor plate (1),
- the manufacturing and/or expiration date of the storage phosphor plate (1),
- the begin of the storage phosphor plate (1) to be read out (BOIP),
- the begin (BOS) of an area (1c) to be read out of the storage phosphor plate (1),
- the begin (BOL) of a line to be read out on the storage phosphor plate (1).

2. System according to claim 1, wherein the marking information further relates to at least one of the following items of information:
- the sensitivity of the storage phosphor plate (1) for X-rays,
- the identification number of the storage phosphor plate (1),
- a defined spatial distance on the storage phosphor plate (1),

3. System according to any of the preceding claims, wherein the marking information comprises information regarding the reading out process of the storage phosphor plate (1).

4. System according to claim 3, wherein the marking information further relates to at least one of the following items of information:
- the position of the storage phosphor plate (1) in the device during the reading out process,
- the temporal behaviour of a stimulating light beam (3') moved along a line (8) during the reading out process,
- the temporal change of the sensitivity of the device, during the reading out of a line (8) of the storage phosphor plate (1), to the first emission light emitted by said storage phosphor plate (1).

5. System according to any one of the preceding claims, wherein the storage phosphor plate (1) comprises a base layer (1a) and a storage phosphor layer (1b) that is applied to a first side of the base layer (1a), and wherein the marking (20 - 26) is located on the first side of the base layer (1a).

6. System according to claim 5, wherein the marking (20 - 26) is located in an area of the base layer (1a) situated outside of the storage phosphor layer (1b).

7. System according to claim 5 or 6, wherein the marking (20 - 26) has the form of a barcode (21) in which data is encoded in the form of lines and gaps of different width.

8. System according to any one of the claims 5 to 7, wherein the marking (20 - 26) comprises at least one identification, in particular in the form of points, lines (22, 23) or two-dimensional forms (24 - 26), whose form and/or position on the first side of the base layer (1a) determine(s) the marking information.

9. System according to any one of the claims 1 to 4, wherein a marking (30 - 33) is arranged in the device in such a way that a stimulating light beam (3') generated by the light source (2) can impinge on said marking (30 - 33) prior to and/or after the stimulating light beam (3') impinges on the storage phosphor plate (1) during the reading out process.

10. Systems according to any one of the preceding claims, wherein the marking (20 - 26; 30 - 33) reflects and/or scatters the stimulating light, at least in partial areas of the marking (20 - 26; 30 - 33), more strongly than the storage phosphor plate (1).

11. System according to any one of the preceding claims, wherein the sensitivity of the detector (7), if applicable including a filter that is located in front of the detector (7), is higher for the second emission light emitted by the marking (20 - 26; 30 - 33) than for the stimulating light.

12. Method for reading out X-ray information stored in a storage phosphor plate (1) in a device, in which a storage phosphor plate (1) is stimulated with the stimulating light (3) generated by a light source (2) to emit first emission light, which is detected by a detector (7), wherein the stimulating light (3) generated by the light source (2) impinges on at least one marking (20 - 26), which is provided on the storage phosphor plate (1) and which comprises marking information, and is thereby at least partially reflected and/or scattered by the marking (20 - 26) and/or stimulates the marking (20 - 26) to emit second emission light, in particular luminescent light, and wherein the reflected and/or scattered stimulating light (3) or the emitted second emission light, respectively, is detected by the detector (7) and the marking information contained in the marking is derived therefrom,
**characterized in that**
the method further comprises:
controlling the reading out of the storage phosphor plate (1) and/or a processing of the read out X-ray information based on the marking information contained in the marking, wherein the marking information contains information which relates to the storage phosphor plate (1) and which contains at least one of the following items of information:
- the size of the storage phosphor plate (1),
- the manufacturing and/or expiration date of the storage phosphor plate (1),
- the begin of the storage phosphor plate (1) to be read out (BOIP),
- the begin (BOS) of an area (1c) to be read out of the storage phosphor plate (1),
- the begin (BOL) of a line to be read out on the storage phosphor plate (1).

13. Storage phosphor plate (1) for use in a method according to claim 12, comprising at least one marking (20 - 26) which comprises marking information and which is arranged and configured in such a way that stimulating light (3) which impinges on the marking (20 - 26) and which can stimulate the storage phosphor plate (1) to emit first emission light, can stimulate the marking (20 - 26) to emit second emission light, in particular luminescent light,
**characterized in that**
said marking information contains information relating to the storage phosphor plate (1) and relates to at least one of the following items of information:
- the size of the storage phosphor plate (1),
- the manufacturing and/or expiration date of the storage phosphor plate (1),
- the begin of the storage phosphor plate (1) to be read out (BOIP),
- the begin (BOS) of an area (1c) to be read out of the storage phosphor plate (1),
- the begin (BOL) of a line to be read out on the storage phosphor plate (1).

## Revendications

1. Système de lecture d'informations radiographiques stockées dans une plaque luminescente à mémoire (1), comprenant
une plaque luminescente à mémoire (1) dans laquelle peuvent être stockées des informations radiographiques,
un dispositif de lecture d'informations radiographiques stockées dans la plaque luminescente à mémoire (1) à l'aide d'une source lumineuse (2) servant à générer de la lumière de stimulation (3) capable de stimuler la plaque luminescente à mémoire (1) afin de la faire émettre une première lumière d'émission, ainsi qu'un détecteur (7) servant à détecter la première lumière d'émission émise par la plaque luminescente à mémoire (1), et
au moins un marquage (20 - 26) prévu sur la plaque luminescente à mémoire (1) et contenant une information de marquage et qui est disposé et configuré de façon à ce que la lumière de stimulation (3) puisse frapper sur le marquage (20 - 26) et puisse être réfléchie et/ou diffusée au moins partiellement par le marquage (20 - 26) et/ou puisse stimuler le marquage (20 - 26) afin de le faire émettre une deuxième lumière d'émission, en particulier de la lumière luminescente, ladite lumière de stimulation (3) réfléchie et/ou diffusée ou respectivement ladite deuxième lumière d'émission émise étant détectée par le détecteur (7) et l'information de marquage contenue dans le marquage pouvant être dérivée de celle-ci,
**caractérisé par**
un dispositif de contrôle (15) configuré de façon à contrôler la lecture de la plaque luminescente à mémoire (1) et/ou un traitement des informations radiographiques lues à l'aide de l'information de marquage contenue dans le marquage,
où ladite information de marquage contient une information relative à la plaque luminescente à mémoire (1) et qui contient au moins l'une des informations suivantes:
- la taille de la plaque luminescente à mémoire (1),
- la date de production et/ou d'expiration de la plaque luminescente à mémoire (1),
- le début de la plaque luminescente à mémoire (1) à lire (BOIP),
- le début (BOS) d'une zone (1c) à lire de la plaque luminescente à mémoire (1),
- le début (BOL) d'une ligne à lire sur la plaque luminescente à mémoire (1).

2. Système selon la revendication 1, **caractérisé en ce que** l'information de marquage concerne en outre au moins l'une des informations suivantes:
- la sensibilité de la plaque luminescente à mémoire (1) aux rayons X,
- le numéro d'identification de la plaque luminescente à mémoire (1),
- une distance spatiale définie sur la plaque luminescente à mémoire (1),

3. Système selon l'une quelconque des revendications précédentes, **caractérisé en ce que** l'information de marquage comprend une information relative au processus de lecture de la plaque luminescente à mémoire (1).

4. Système selon la revendication 3, **caractérisé en ce que** l'information de marquage concerne en outre au moins l'une des informations suivantes:
- la position de la plaque luminescente à mémoire (1) dans le dispositif lors de la lecture,
- le comportement temporel d'un faisceau de lumière de stimulation (3') déplacé le long d'une ligne (8) lors de la lecture,
- le changement temporel de la sensibilité du dispositif, lors de la lecture d'une ligne (8) de la plaque luminescente à mémoire (1), à la première lumière d'émission émise par celle-ci.

5. Système selon l'une quelconque des revendications précédentes, **caractérisé en ce que** la plaque luminescente à mémoire (1) comprend une couche de base (la) et une couche luminescente à mémoire (1b) appliquée sur un premier côté de la couche de base (la) et que le marquage (20 - 26) se situe sur le premier côté de la couche de base (la).

6. Système selon la revendication 5, **caractérisé en ce que** le marquage (20 - 26) se situe dans une zone de la couche de base (la) située en dehors de la couche luminescente à mémoire (1b).

7. Système selon la revendication 5 ou 6, **caractérisé en ce que** le marquage (20 - 26) a la forme d'un code-barres (21) dans lequel sont encodées des données sous forme de lignes et d'espaces de largeur différente.

8. Système selon l'une quelconque des revendications 5 à 7, **caractérisé en ce que** le marquage (20 - 26) comprend au moins une identification, en particulier sous forme de points, lignes (22, 23) ou formes bidimensionnelles (24-26), dont la forme et/ou la position sur le premier côté de la couche de base (la) détermine(nt) l'information de marquage.

9. Système selon l'une quelconque des revendications 1 à 4, **caractérisé en ce qu'**un marquage (30 - 33) est disposé dans le dispositif de façon à ce qu'un faisceau de lumière de stimulation (3') généré par la source lumineuse (2) puisse frapper sur ledit marquage (30 - 33) avant et/ou après que le faisceau de lumière de stimulation (3') frappe sur la plaque luminescente à mémoire (1) lors de la lecture.

10. Système selon l'une quelconque des revendications précédentes, **caractérisé en ce que** la lumière de stimulation est réfléchie et/ou diffusée plus fortement par le marquage (20 - 26; 30 - 33), au moins dans des zones partielles du marquage (20 - 26; 30 - 33), que par la plaque luminescente à mémoire (1).

11. Système selon l'une quelconque des revendications précédentes, **caractérisé en ce que** le détecteur (7), le cas échéant y compris un filtre situé devant le détecteur (7), est plus sensible à la deuxième lumière d'émission émise par le marquage (20 - 26; 30 - 33) qu'à la lumière de stimulation.

12. Procédé de lecture d'informations radiographiques stockées dans une plaque luminescente à mémoire (1) dans un dispositif, où une plaque luminescente à mémoire (1) est stimulée par la lumière de stimulation (3) générée par une source lumineuse (2) afin d'émettre une première lumière d'émission qui est détectée par un détecteur (7), où la lumière de stimulation (3) générée par la source lumineuse (2) frappe sur au moins un marquage (20 - 26) prévu sur la plaque luminescente à mémoire (1) et comprenant une information de marquage, et est en ce moment-là réfléchie et/ou diffusée au moins partiellement par le marquage (20 - 26) et/ou stimule le marquage (20 - 26) afin de le faire émettre une deuxième lumière d'émission, en particulier de la lumière luminescente, et où la lumière de stimulation (3) réfléchie et/ou diffusée ou respectivement la deuxième lumière d'émission émise est détectée par le détecteur (7) et où l'information de marquage contenue dans le marquage est dérivée de celle-ci,
**caractérisé en ce que**
ledit procédé comprend en outre:
le contrôle de la lecture de la plaque luminescente à mémoire (1) et/ou d'un traitement des informations radiographiques lues à l'aide de l'information de marquage contenue dans le marquage, où ladite information de marquage comprend une information relative à la plaque luminescente à mémoire (1) et qui contient au moins l'une des informations suivantes:
- la taille de la plaque luminescente à mémoire (1),
- la date de production et/ou d'expiration de la plaque luminescente à mémoire (1),
- le début de la plaque luminescente à mémoire (1) à lire (BOIP),
- le début (BOS) d'une zone (1c) à lire de la plaque luminescente à mémoire (1),
- le début (BOL) d'une ligne à lire sur la plaque luminescente à mémoire (1).

13. Plaque luminescente à mémoire (1) pour utilisation dans un procédé selon la revendication 12, comprenant au moins un marquage (20 - 26) comprenant une information de marquage et étant disposé et configuré de façon à ce que de la lumière de stimulation (3) frappant sur le marquage (20 - 26) et pouvant stimuler la plaque luminescente à mémoire (1) afin de la faire émettre une première lumière d'émission puisse stimuler le marquage (20 - 26) afin de le faire émettre une deuxième lumière d'émission, en particulier de la lumière luminescente,
**caractérisée en ce que**
ladite information de marquage comprend une information relative à la plaque luminescente à mémoire (1) et qui concerne au moins l'une des informations suivantes:
- la taille de la plaque luminescente à mémoire (1),
- la date de production et/ou d'expiration de la plaque luminescente à mémoire (1),
- le début de la plaque luminescente à mémoire (1) à lire (BOIP),
- le début (BOS) d'une zone (1c) à lire de la plaque luminescente à mémoire (1),
- le début (BOL) d'une ligne à lire sur la plaque luminescente à mémoire (1).
